# EUROPEAN PATENT SPECIFICATION

(11) **EP 2 780 269 B1**
(45) Date of publication and mention of the grant of the patent: **17.08.2016**
(21) Application number: 12850597.1
(22) Date of filing: 07.11.2012
(51) Int. Cl.: B65G 57/26, B65G 57/03, B65G 57/10

(54) **METHOD AND APPARATUS FOR STACKING OF TIMBER AND METHOD FOR USING A LATH**
VERFAHREN UND VORRICHTUNG ZUM STAPELN VON BAUHOLZ UND VERWENDUNG EINER LATTE
PROCÉDÉ ET APPAREIL D'EMPILAGE DE BOIS D'OEUVRE ET UTILISATION D'UNE LATTE

(30) Priority: 15.11.2011 SE 1151088
(43) Date of publication of application: 24.09.2014
(73) Proprietor: Renholmen AB, 930 47 Byske (SE)
(72) Inventor: JOHANSSON, Jan, SE-907 42 UMEÄ (SE); JONSSON, Peter, S-931 46 Skellefteå (SE); MARKLUND, Gunnar, S-930 47 Byske (SE)
(74) Representative: Zacco Sweden AB
(86) International application number: PCT/SE2012/051208
(87) International publication number: WO 2013/074020

(56) References cited:
- WO-A1-01/47794
- WO-A1-95/33670
- WO-A1-02/094517
- CA-A1- 2 456 958
- SE-B- 415 879
- SE-B- 415 879
- US-A- 4 801 233
- US-A- 4 810 152
- US-A- 4 810 152
- US-A1- 2002 159 875

## Description

The present invention concerns a method for depositing laths between different layers perpendicular to the longitudinal direction of the layer during the output of layers of timber for the formation of a stack of timber according to the introduction to claim 1 and apparatus for the execution of the method according to claim 6. The invention includes also a method of using a lath according to claim 13.

When forming stacks of timber, laths are placed between layers of timber that are stacked on top of each other, perpendicular to the longitudinal direction of the layer, whereby one or several deposition means that support layers of timber move along a pathway, continuously or discontinuously, forwards towards, above and below, and away from a lift arrangement with a stacking base that can be raised and lowered, on which stacking base the layers of timber are laid, and laths are placed between separate layers of timber by means of a mobile means that collects laths from a magazine and deposits these onto the most recently deposited layer in the stack of timber. One disadvantage of prior art arrangements for the stacking of layers of timber and the deposition of laths between the layers is that they generally delay the deposition of the layers of timber since deposition of laths requires an interruption in the output of the layers of timber by means of the layer-deposition means. Briefly stated, the deposition means must wait not only until the lath-deposition means has moved away from the stack of timber and placed the lath onto the layer of timber, but also until the lath-deposition means has returned to a withdrawn position at which it does not obstruct the layer-deposition means.

The deposition means for the transport of layers of timber to the lift arrangement is normally designed as a number of parallel swords or fingers known as "deposition arms", which are arranged to lift from below layers of pieces of timber from what is known as the "layer-formation unit" from layers of timber collected in groups in the layer-formation unit, and subsequently transport the layer in an essentially horizontal direction in over and down onto the stacking base of the lift arrangement. The transfer arms are subsequently withdrawn while the layer of timber is scraped off from the transfer arms, whereby the layer is placed directly onto the stacking base if it is a case of the lowermost layer in a stack, or onto the uppermost layer of timber, if layers of timber have been previously laid. The lath transporter is located in the close vicinity of the lift arrangement and is guided towards the deposition means in order to deposit laths at a suitable frequency onto the layers of timber that have been laid. In order to scrape the layer from the transfer arms retaining means that act against one edge of the layer are present and function as a counterpiece and in this way retain the layer over the lift arrangement while the transfer arms are withdrawn in the direction of the input transporter. There is, however, the problem, particularly with slender timber, that the pieces of timber tend to tip or become disorganised when the transfer arms are withdrawn, which limits the capacity of this type of arrangement. In order to prevent this, the solution of providing a holder is known, which holder can be brought from a withdrawn resting position to interact with the upper surface of the layer of timber and in this way to press down in a retaining manner the uppermost or the most recently laid layer of timber while the transfer arms are withdrawn from the layer. It should be understood in this part that the holder also here must be withdrawn such that it is located in a position that does not obstruct before a new layer of timber can be placed onto the uppermost layer of timber in the lift arrangement, which, naturally, delays the deposition of the layers of timber. As a consequence, the said holder is also significantly limiting for the speed with which an arrangement of the type described above can be operated, and consequently for how rapidly and efficiently timber can be stacked.

In summary, it can be concluded that the capacity of previously known arrangements for stacking, lath-deposition and the formation of stacks of timber in stackers, in addition to the said holder, is limited also by the manner in which the lath-deposition and layer-deposition means move relative to each other since the deposition of laths by means of the lath-deposition means requires an interruption in the output of layers of timber by means of the deposition means. These circumstances involve also limitations with respect not only to the possibilities of using lath-deposition means together with continuously operating deposition means, but also to the possibilities of using common driving arrangements for both the layer-deposition means and lath-deposition means in a plant for the stacking and formation of stacks of timber with laths inserted.

US 4,324,520 A1 discloses a method according to the preamble of claim 1 and an arrangement according to the preamble of claim 6. This document reveals an arrangement that, in order to form a stack of timber, has a linearly displaceable lath-input means that grips the rear end of the lath, i.e. with what is in principal a freely supporting interaction, and feeds the lath in a working stroke towards the base of the stacker at the same time as the reciprocating motion of the transfer arms of the layer-deposition means, such that the laths and layers of timber perform, at least during a part of the process, relative countermotion. The lath that has been gripped is released onto the upper surface of the layer of timber when the lath-input means reaches a pre-determined position in over the layer of timber. According to the document, the mutual motion between the layer-deposition means and the lath-deposition means takes place on different levels and without contact between the lath and the layer of timber during the deposition of the lath.

The purpose of the present invention, therefore, is to design, based on prior art technology, an arrangement for the formation of stacks of timber with laths inserted in which the lath-deposition means is so arranged that the transfer arms that support layers of timber of the layer-deposition means can be operated at a higher speed and such that the total capacity of the arrangement can in this manner be considerably increased.

This purpose of the invention is achieved with a method that demonstrates the features and characteristics that are specified in claim 1. An arrangement for the execution of the method according to the invention is characterised by the features that are specified in claim 6, while a method of using a lath is suggested in claim 13. Further characteristics and advantages of the invention are made clear by the non-independent claims.

The insight that forms the basis of the invention is that an increase in capacity can be achieved through improved control of the pieces of timber in the most recently laid layer while the transfer arms are being withdrawn and the layer of timber is being scraped off. Improved control can be achieved through the laths, which are gripped at their rear ends in order to be deposited on top of a layer of timber, are brought during a part of their deposition motion into interaction with the upper surface of a most recently laid layer of timber in order in this manner to interact, as a holder in a retaining manner, with the layer of timber while the transfer arms of the layer-deposition means are withdrawn from the layer. Due to the improved control of the pieces of timber in a most recently laid layer of timber, the speed during the formation of stacks of timber can be considerably increased. In one design, a lath-input means that is a component of a lath-deposition arrangement is designed to have a gripper that can grip in a freely supporting manner a lath at its rear end, when viewed from the stack of timber, and can move from an upper position vertically downwards towards a stacking base. The deposition of the lath during the vertically downwards movement takes place in a terminating part, with the input means gripping the lath, and with a certain amount of holding force in the interaction with the upper surface of the pieces of timber in a layer of timber, which is located for the purposes of deposition at a position above the stacking base while the layer-deposition means is withdrawn in the return direction out from the said layer of timber. Due to the lath being gripped in a freely supporting manner at its rear end, relative to the layer-deposition arrangement, a significant advantage over lath-deposition arrangements of the previously known type is obtained - such previously known arrangements being either of the type that grips the lath at its centre or at its forward and rear ends - namely that the layer-deposition means can begin its deposition movement for the next layer of timber above the stacking table at a considerably earlier time, while the lath-deposition means is located out of the way of the layer-deposition means, even if it is located at a position where it is still gripping the lath and pressing it down towards the most recently laid layer of timber in the stack.

An embodiment of the invention will be described below in more detail with reference to the attached drawings, of which:

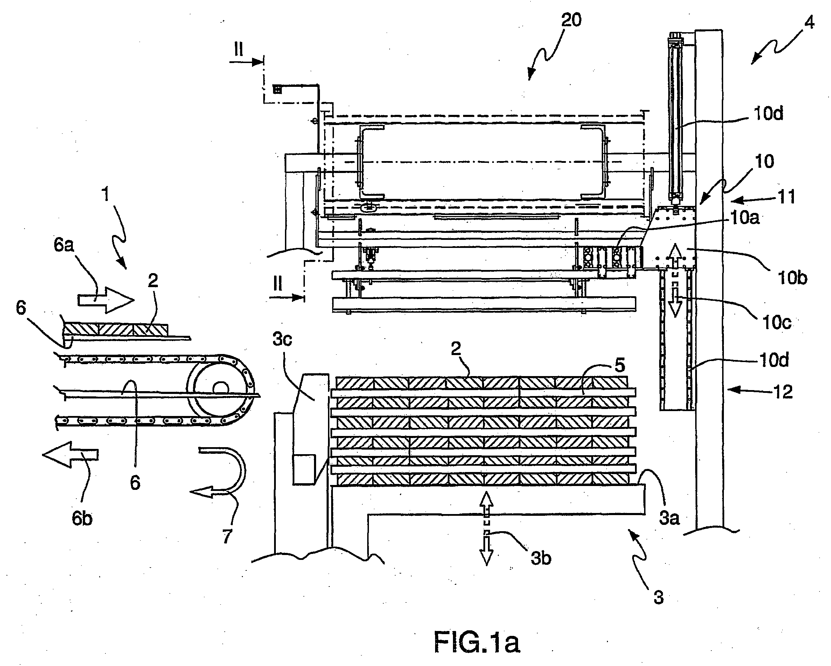

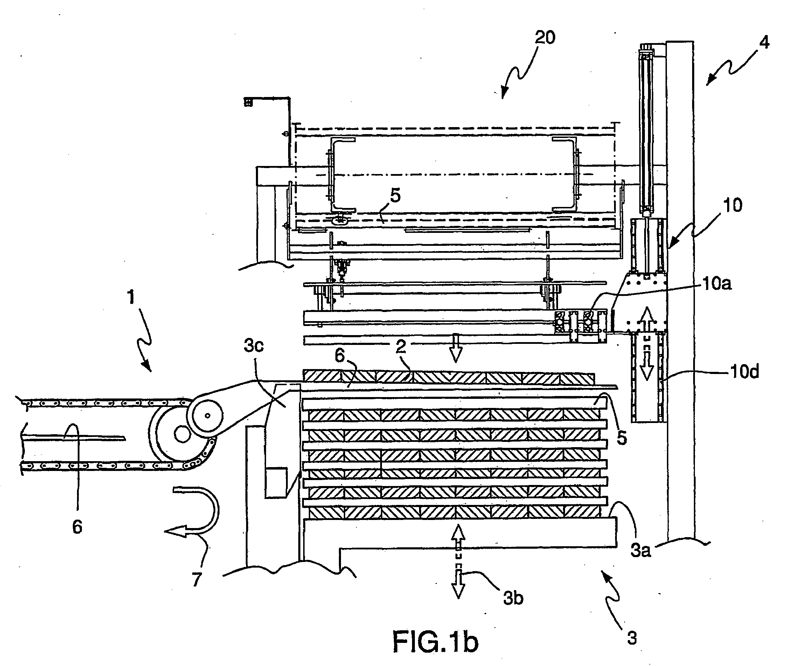

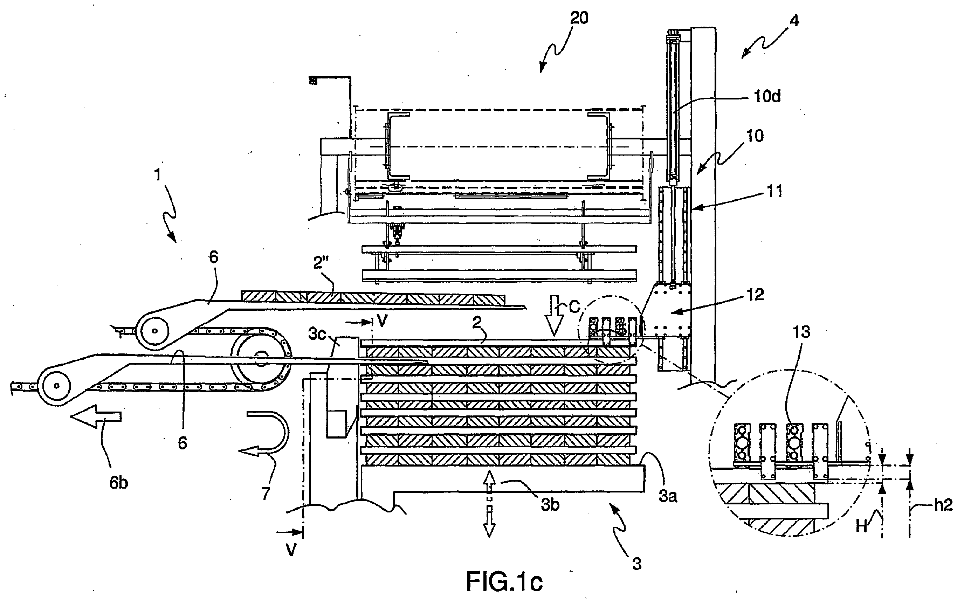

Figures 1 a-1 c show schematically side views of an arrangement for the stacking and insertion of laths among pieces of timber according to the present invention, viewed during different operational steps and during interaction between a layer-deposition means that is a component of the arrangement and that is for the placement of layers of timber in a stack on a lift arrangement and a lath-handling arrangement that is a component of the arrangement and that is equipped with a lath-deposition means for the deposition of laths onto the upper surface of a layer of timber that has been placed in the stack,

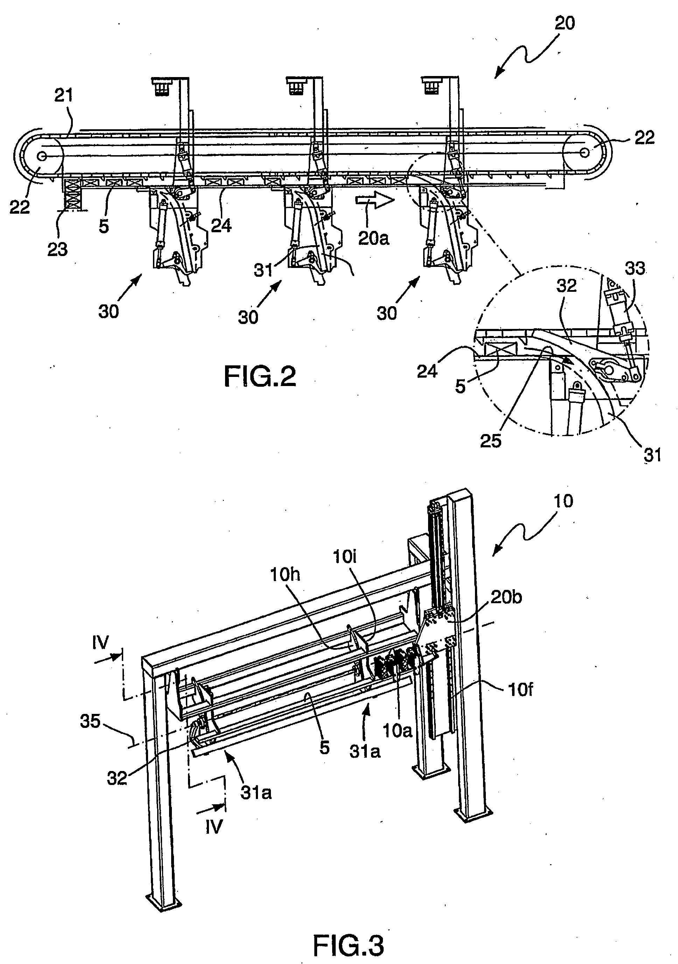

Figure 2 shows a side view, partially in section along the line II-II in Figure 1a, of an upper part of a lath transporter that is a component of the lath-handling arrangement that demonstrates a series of a number of lath-management units separated from each other by a mutual distance with lath cassettes oriented in a row perpendicular to the length of the pieces of timber in each layer of timber in the stack including, not only a lath magazine that is a component of each such lath cassette, but also a lath-promotion mechanism for the promotion of an individual lath from the lower surface of the lath magazine to an upper collection position at the side of the lath cassette, in which collection position the lath-deposition means can grip the lath at its rear end,
Figure 3 shows a perspective view of the lath cassette that is a component of the lath-handling unit with the lath magazine and lath-deposition means that are components of it,
Figure 4 shows a cross-sectional view of the lath magazine that is a component of the lath cassette, viewed along the line IV-IV iri Figure 3,
Figure 5 shows a cross-sectional view of a part of the layer-deposition means that is a component of the present arrangement viewed along the line V-V in Figure 1c and with the deposition arms of the layer-deposition means located at a position withdrawn in the gap that is limited between two layers of timber stacked one on top of the other and laths lying in an intermediate position in the transverse direction,
Figure 6 shows a side view of a separate lath-depression means that, in an alternative embodiment, may be a part of the present arrangement, or a supplement to it.

Figures 1a-1c show in side views an arrangement for stacking and the insertion of laths at pieces of timber collected into layers according to the present invention, viewed at different operational steps in the different drawings. The said arrangement comprises a layer-deposition means 1 intended to collect from a loading position in what is known as a layer-forming unit (not shown in the drawings), i.e. an arrangement with the task of collecting pieces of timber delivered from an input transporter into layers 2, carrying the layers out to an unloading location in a lift arrangement that can be raised and lowered in the vertical direction and that is generally denoted by 3, on which lift arrangement the layers are placed. Since the layer-deposition means 1 as such is well-known this will not be described in more detail, whereby only a forward part of the said layer-deposition means 1 is shown. The lift arrangement 3 is intended to carry the layers of timber that have been stacked one on top of the other on what is known as a stacking base, such that the most recently placed layer 2 or the uppermost layer is located at a level that has been determined in advance. The present arrangement includes also a lath-handling arrangement 4 that has the task of placing, at a suitable frequency and perpendicular to the longitudinal direction of the pieces of timber, laths 5 between the layers of timber that have been placed one on top of the other. For each deposited layer of laths 5 and each layer of timber, the stacking base 3a is lowered by a distance that corresponds to the sum of the thickness of the laths 5 plus and the thickness of the layer of timber 2. The layer-deposition means 1 comprises in known manner a number of parallel forwardly directed transfer arms 6 or support planes that are, in practice, evenly distributed along the length of the pieces of timber that are being transported in the transverse direction. The transfer arms 6 are arranged to move cyclically while following a pathway and are arranged to lift from below in the said loading position (not shown in the drawings) layers 2 of pieces of timber and subsequently transporting, in an essentially horizontal direction of forwards transport that is shown by the arrow 6a, the layer in over the lift arrangement 3. Following the motion cycle of the transfer arms 6, the transfer arms are, as is illustrated with the curved arrow 7, arranged to move a distance essentially vertically downwards in order to be subsequently withdrawn in a linear horizontal return direction as is shown by the arrow 6b while the layer of timber is scraped from the transfer arms. The layer 2 that has been scraped off is placed directly onto the stacking table 3a of the lift arrangement if it is a case of the lowermost layer in a stack, or onto the uppermost layer of timber in the lift arrangement, if a layer of timber has been previously laid.

According to the present invention, the lath-handling arrangement 4 is located directly above the lift arrangement 3 while the said layer-deposition means 1 is located at one side of this. A series of lath-handling units is included in the lath-handling arrangement 4, which units are separated by mutual distances and are located in a row over the lift arrangement 3, perpendicular to the length of the pieces of timber in each layer of timber 2 on the lift arrangement.

In each such lath-handling unit, there is a lath-deposition means 10 which is intended, gripping a lath at its rear end seen relative to the of the layer-deposition means 1, to move perpendicular to the direction of motion 6a, 6b of the transfer arms 6 of the layer-deposition means 1. Alternatively, it can be said that the lath-deposition means 10 moves parallel to the direction of motion of the lift arrangement 3 in the vertical direction denoted by the arrow 3b, whereby laths are collected from an upper position 11 by means of the lath-deposition means 10 in order to be placed on the upper surface of a layer of timber 2 that has been placed on the lift arrangement 3. The lath-deposition means 10 is guided to the layer-deposition means 1 in order to deposit at suitable frequency laths 2 onto layers of timber that have been deposited on the stacking base 3a of the lift arrangement 3. In order to scrape the layer of timber 2 from the transfer arms 6, retaining means 3c are available that act against one edge of the layer and function as a counterpiece and in this way retain the layer over the lift arrangement while the transfer arms 6, as shown by the arrow 6b, are withdrawn from the stack in the direction of a layer-forming unit (not shown in the drawings) that has been arranged upstream. Thus the task of the lath-deposition means 10 is to deposit laths 5 onto the uppermost layer that has been left on the lift arrangement 3 before the transfer arms 6 transfer a further layer 2 to the stack of timber.

With reference also to Figure 3, the lath-handling arrangement 4 comprises at its upper part a lath-carrying transverse transporter 20 of carrier type that is designed with chains 21 running between wheels 22, and with which transporter laths 5 are collected from a magazine 23, not shown in detail in the drawings, for transport forwards in their transverse direction along a pathway that extends directly over the lift arrangement 3, and along which pathway the laths are transported in their transverse direction resting on a support 24 formed from a number of parallel rails that extend in the direction of transport. The lath-carrying transverse transporter 20 thus transports laths 5 resting on the support plane 24 directly over and in a transverse direction to the longitudinal direction of the layers of timber 2 that have been stacked on the lift arrangement 3, as is seen most clearly in Figures 1a-1c. A number of lath cassettes 30 are arranged under the lath-carrying transverse transporter 20 and directly above the lift arrangement 3 at a mutual separation from each other in a row along the direction of transport of the transverse transporter 20, shown with the arrow 20a. One such lath cassette 30 is a component of each lath-handling unit.

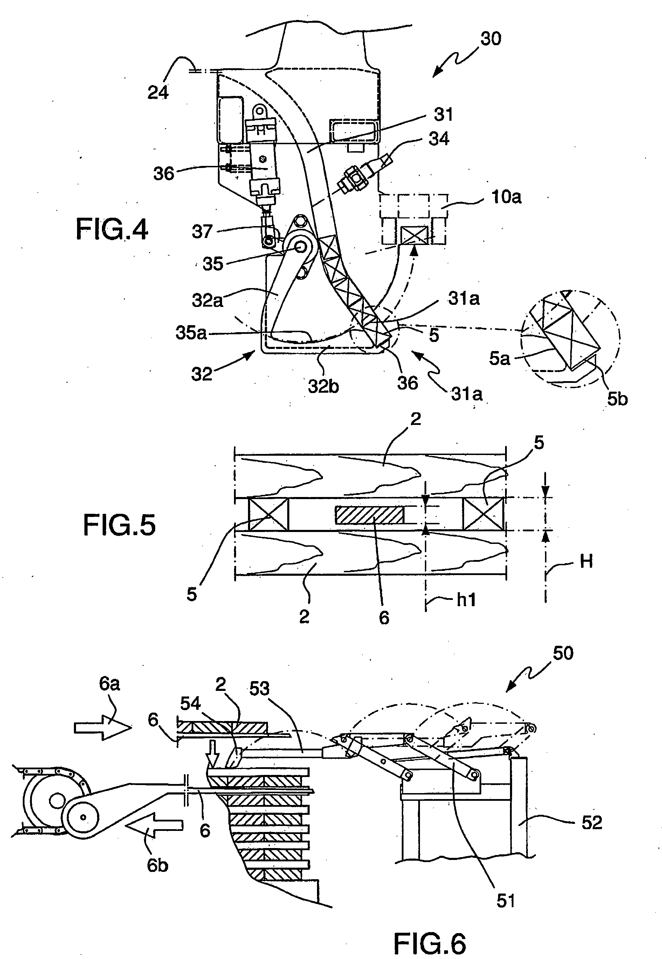

With particular reference to the enlargement of detail shown in Figures 2 and 4, each such lath cassette 30 comprises a lath magazine 31 in which laths 5 are stored, stacked on each other in the transverse direction to the length of the pieces of timber in the layers of timber 2, i.e. the laths are stored in the said lath magazine in the same direction as that in which they have been fed forwards on the lath-carrying transverse transporter 20 that is located above. A section has been cut in the support plane 24 at a part above each lath cassette 30 and thus the support plane is provided with an opening 25 down towards the relevant lath cassette. Each lath cassette 30 is provided at its upper part with a control arrangement that comprises a number of flaps 32 that are distributed along the length of a lath 5, and which flaps can be placed, by the use of a cylinder that provides force, into and removed from the flow of laths 5 that are fed forwards on the lath-carrying transverse transporter 20. It is possible to unlink laths 5 from the transverse transporter 20 with the aid of the flaps 32, when this is necessary, and the laths can be guided down into the lath magazine 31 of the lath cassette 30. A measurement means 34 in the form of an optical sensor is present in each lath magazine 31 that checks the number of laths 5 stacked one on top of the other in the magazine by reading off a level. When the number of laths 5 in any one of the lath magazines 31 of the lath cassettes 30 falls below a pre-determined number, the measurement means 34 transmits a signal to control equipment not shown in the drawings, which equipment in turn orders the cylinder 33 that provides force to reset the flaps 32 into such a position that laths 5 are guided down into the lath magazine that currently requires refilling.

Figures 1a-1c and Figure 3 show a lath-deposition means that is arranged downstream when viewed in the direction of transport of the transverse transporter 20, at the side of each lath cassette 30, which lath-deposition means has the task of collecting a lath 5 from the lath magazine 31 and subsequently passing the lath down to a position above a layer of timber 2 placed on top of the lift arrangement 3. The lath-deposition means 10 comprises a gripper 10a intended to grip in a freely supporting and retaining manner the rear end, viewed relative to the lift arrangement 3, of a lath 5 such that the lath, held fixed by the gripper, is located in an essentially horizontal position. The gripper 10a is supported on a slide 10b that, as is illustrated by the double arrow 10c, can be vertically driven through the influence of a cylinder 10d that provides force upwards and downwards along parallel rails 10f between an upper, defined collection position 11, in which the gripper can grip a lath fed out from the lath magazine 31, and a lower, defined deposit position 12, in which the lath can be deposited onto a layer of timber 2 that has been laid on the lift arrangement 3. The gripper 10a extends horizontally out from the slide 10b and is arranged to grip, by means of a series of grip fittings 10g, comprising clamping arms that can be displaced against each other, the rear end of a lath 5 that is located repositioned into the said upper collection position 11 at the side of the lath cassette 30. The lath 5 is deposited at the lower deposit position 12 to the upper surface of a most recently laid layer of timber 2 at the stack of timber, through the gripper 10a being set into a non-gripping condition. According to the present invention, the lath 5 that has been gripped by the gripper 10a is held all the time oriented essentially plane parallel to the layer of timber 2 that has been placed on the lift arrangement 3, and when it is located at its lower position it is brought into such interaction with the upper surface of the layer of timber 2, as is indicated by the arrow C in Figure 1c, that the pieces of timber are held fixed in the layer, while the layer-deposition arms 6 are withdrawn from the layer as is shown by the arrow 6b. The gripper 10a has cylinders (not shown in the drawings) that provide force and that are driven by pressurised air, which cylinders can, when activated, reset the clamping arms that act against each other such that they grip local parts of the rear end of the lath.

As is made clear by Figures 3 and 4, each lath magazine 31 is limited by forward and rear walls 10h and 10i, respectively (not shown in detail in the drawings), formed by sheets of metal that are set transversely to the laths that are stored in the lath magazine 31, which sheets of metal form between them a pathway that allows the laths, during gradual guidance, to move downwards as laths are removed from a lath-removal opening 31a in the lower end of the lath magazine 31. The lath magazine 31 is provided with a number of principally L-shaped lath-transfer arms 32 that act in pairs and that are arranged such that they block in a withdrawn, lower position the lath-removal opening 31 a that is located under the lath magazine 31. When activated, the lath-transfer arms 32 have the task of transferring, one at a time, a lath 5 that is located at the bottom of the pathway to the said upper collection position 11 at the side of the lath cassette 30, in which position the lath can be gripped between the clamping arms of the gripper 10a, which clamping arms can move against each other. Each lath-transfer arm 32 demonstrates a first 32a and a second 32b shank. The first shank 32a of the lath-transfer arm 32 is fixed attached at its end at the end of a rotation shaft 33 [sic, the cylinder is 33, the shaft 35] that extends centrally through the lath cassette 30 and that is mounted to pivot in this for rotation around an axis that is essentially parallel to the direction of motion of the layer-deposition means 1, or - to be more accurate - that of the transfer arms 6. The second shank 32b of the lath-transfer arm 32 is provided at its free end with a support surface 36 that demonstrates an indentation that corresponds to the form of two neighbouring extended sides 5a, 5b of a lath 5 such that a lath 5, resting at its ends on the support surfaces 36 of two lath-transfer arms 32 that function in a pair, can, in a supportive manner, be transferred from the lower inactive position at which it blocks the lath-output opening 31a under the lath magazine 31 to the upper collection position 11 at the side of the lath magazine 31, by being lifted upwards in an arc-shaped pathway. Rotation of the rotation shaft 35 takes place through the influence of a double-action cylinder 36 that provides force arranged to influence a lever 37 attached at the periphery of the rotation shaft whereby the lath 5 is transferred by following a pathway that has the form of an arc of a circle at a radial distance from the rotation shaft.

As is made most clear by Figure 4, the second shank of the lath-transfer means has, in order to be able to transfer one lath 5 at a time from the opening in the lower part of the lath magazine, been provided with a concave cam surface 35a, or one having essentially the shape of an arc of a circle, on its side that faces the rotation shaft. This concave cam surface 35a has been given such a radius or shape, based on the said rotation shaft 35, that the cam surface is allowed to sweep past or glide against a subsequent lath in the magazine such that this subsequent lath 5 and other laths remain in the magazine, while the two interacting transfer arms, supporting a lath on the support surfaces between them, lift this lath up to the upper lath-delivery position 12 at the side of the lath cassette 31. The transfer of a lath in this way becomes automatic and means that the lath 5 can be transferred at high speed from the lath magazine 31 to the lath-deposition means 10 and onwards down to a position for interaction with a layer of timber 2 that has been placed on the lift arrangement 3 while the transfer arms 6 of the layer-deposition means 1 are withdrawn from the stack of timber.

Figure 5 shows a cross-sectional view of the layer-deposition means viewed along the line V-V in Figure 1 c. The deposition arms 6 of the layer-deposition means 1 are located in this case withdrawn into a position in a gap 40 that is limited between two layers of timber 2, 2' that are stacked one on the other. The laths 5 are placed between the said layers of timber 2, 2' and extend in the transverse direction relative to the pieces of timber in the layers. In order to obtain improved control of the pieces of timber in a most recently laid layer while the transfer arms are withdrawn and the layer of timber is scraped off, i.e. in order that the transfer arms 6 are not to influence a layer of timber that has been laid on the stack most recently, and thus that the pieces of timber shall rollover or become entangled, the deposition arms 6 have been given a height "h1" that is less than the height "H" of a lath, i.e. h1 < H.

With reference to the enlargement of detail shown in a ring in Figure 1c, the clamping arms 10e of the gripper 10a, which are mobile against each other, have been given a height h2 that has been so selected relative to a roof or seating defined at the upper part of the gripper and against which it is intended that the extended side 5c of the gripped lath is to support, that the clamps extend only a limited distance downwards along the two parallel vertical sides 5a of the lath. The limited extension downwards of the clamping arms 10e ensures that the interaction between the lath 5 and the upper surface of a most recently laid layer of timber while the depositing arms 6, as is illustrated by the arrow D in Figure 1c, are withdrawn from the stack takes place exclusively through the influence of the lath, i.e. without risk of influence from the clamping arms 10e.

Figure 6 shows a side view of a lath-depression means generally denoted by 50 that has been placed on the opposing side of the lift arrangement 3 relative to the layer-deposition means 1. This lath-depression means 50 is intended to be used as a supplement to the arrangement described above while it makes it possible, in particular in the case of thin timber, to operate the transfer arms 6 that support layers of timber of the layer-deposition means 1 at a higher speed. The lath-depression means 50 comprises a parallel-control mechanism 51 that is supported on a frame 52, which parallel-control mechanism in turn supports an extended lath-depression finger 53 arranged to pivot in the vertical plane that lies plane parallel with the direction of motion of the deposition means 1 towards the lift arrangement 3. To be more precise, the free outermost part 54 of the lath-depression finger 53 is arranged to move along a pathway having the form of a relatively shallow arc of a circle between a forwards depression position, in which the free part 54 exerts a pre-determined force of depression against the upper surface of a layer of timber that has been placed on a lath that has been placed down on the lift arrangement, and a withdrawn rear resting position, in which the free part 54 is located at a position at which it is withdrawn from a position above the lift arrangement.

This is achieved, in particular, through the lath-depression means 50 moving, during its return motion from its position at which it depresses the laths, principally along a shallow pathway with a large radius essentially parallel to and in the same direction as the direction of forwards motion of the deposition means 1 during the deposition of a layer of timber on the stack 3. One of the advantages of the said parallel-directed return motion from the position at which it depresses the lath is that the lath-depression means 50 can be retained at its operational lath-depression position during a relatively long time before it must be withdrawn such that it is located out of the way before a new layer of timber can be placed down onto the lift arrangement 3. As is shown in Figure 6, it should be possible to retain the outermost part 54 or finger of the lath-depression means 50 essentially in its lath-depression position until a new layer of timber 2 carried by the layer-deposition means 1, moving in the direction of the arrow 6a, is located at a position centrally above the lift arrangement 3 and is ready to begin its motion downwards to be deposited onto the stack. It should furthermore be realised that the distance of motion of the lath-deposition means 10 from the upper collection position 11 at the side of the lath cassette 30 down to the deposition position for the deposition of a lath onto the upper surface of a layer of timber 2 placed on the lift arrangement will be relatively short, which has a positive influence on the capacity.

The present arrangement for stacking and the insertion of laths between layers of timber has the following working procedure:
The present arrangement is shown in Figure 1a in a condition in which the deposition arms 6 of the layer-deposition means 1, as indicated by the arrow, transport a layer of timber 2 in a direction towards the stacking base 3a of the lift arrangement 3 for deposition. The lath-deposition means 10 of the lath-handling arrangement 4 is in this case positioned in its upper collection position 11 at the side of the lath cassette 30 and with the gripper 10a gripping the rear end of a lath 5 that has been fed out by means of the lath-transfer arms 32 of the lath cassette 30 from the lower surface of the said lath cassette to the upper collection position at the side of the lath cassette.

The arrangement is shown in Figure 1b in a condition in which the lath that is held by the gripper 10a of the lath-deposition means 10 is moving downwards to a position above the stacking base 3a of the lift arrangement 3 through being driven in a first part of a working stroke linearly downwards to the lower deposition position 12 in order to be deposited on the upper surface of a layer of timber 2' that has previously been laid on the lift arrangement 3. The motion during the said first part of the working stroke, thus, takes place in a direction that is essentially perpendicular to the direction of motion of the deposition means 1 and with the lath moving plane parallel to the stacking base 3a of the lift arrangement 3.

The transfer arms 6 of the layer-deposition means 1 have moved in Figure 1c a further distance, whereby a further new layer of timber denoted 2" has been collected from the loading position, not shown in the drawings, and is now located brought forwards to a position somewhat in over the deposition table 3a of the lift arrangement 3. The current layer of timber 2 is in this case in a position in which it is finally deposited onto the lift arrangement 3 through the transfer arms 6 being withdrawn in a linear horizontal motion, as indicated by the arrow 6b in Figure 1a, while the layer of timber 2 is scraped from the transfer arms. According to the invention, the gripper 10a does not release its grip on the lath as soon as it makes contact with the layer of timber 2 that has been laid onto the lift arrangement 3, but retains its grip on the lath in interaction with the layer of timber during a pre-determined period of time. To be more precise, the lath 5 that is held fast at its rear end by the gripper 10a of the lath-deposition means 10 is brought into interaction during a second part of the working stroke with the upper surface of the layer of timber 2 such that it in this manner stabilises the pieces of timber in the uppermost of most recently laid layer of timber while the transfer arms 6 are withdrawn from the layer.

The previous requirement for separate holders, in particular when handling thin timber, is thus removed as a result of this, when using this type of arrangement. Due to the fact that the gripper 10a of the lath-deposition means 10 grips the lath in a freely supporting manner at its rear end relative to the layer-deposition means 1, and uses the lath asia holder in order to stabilise the pieces of timber in the most recently laid layer 2, the risk that the pieces of timber will fall or become disorganised when the transfer arms 6 are withdrawn from the layer of timber, as is illustrated by the arrow 6b in Figure 1c, is eliminated. Due to the fact that the gripper 10a of the lath-deposition means 10 grips the rear end of the lath, furthermore, the previous problems of the need that the gripper 10a of the lath-deposition means 10 must disappear or be removed from being an obstruction before a new layer of timber can be deposited onto the uppermost layer of timber are avoided, while, due to the fact that the lath is gripped at a rear position, it is possible, as is made most clear by Figure 1c, for a new layer of timber to be collected and moved forwards to a position essentially in over the deposition table 3a of the lift arrangement 3 before the gripper 10a needs to release its grip on the lath and be returned to its upper collection position 11 at the side of the lath cassette 30.

The present invention is not limited to what has been described above and shown in the drawings: it can be changed and modified in several different ways within the scope of the innovative concept defined by the attached patent claims.

## Claims

1. A method, during the feeding out of layers of timber (2), for forming stacks of timber by positioning laths (5) between different layers perpendicular to the longitudinal direction of the layer, whereby one or several layer-deposition means (1) that support the layers of timber move towards, over, down and back away from a lift arrangement (3) on which the layers are laid, that laths (5) are placed on the upper surface of layers of timber that have been laid on the lift arrangement by means of a mobile lath-deposition means (10) for each lath, which means (10) feeds down the lath from a position above the lift arrangement essentially parallel to the direction of motion of the lift arrangement (3), **characterised in that** it comprises any one of the following steps:
(i) that the lath-deposition means (10), during the gripping of the rear end of a lath (5) and thus that end of the lath that faces away from the direction of motion of the layer-deposition means (1) towards the lift arrangement (3), feeds the lath down towards the lift arrangement (3) at the same time as the feed motion (6a) of the layer-deposition means (1) towards the lift arrangement such that laths and layers of timber at least during a part of the procedure carry out transversely directed relative motion at different levels above the lift arrangement (3), not in contact with each other:
(ii) that the lath-deposition means (10) during the gripping of the rear end of a lath (5), and thus that end of the lath that faces away from the direction of motion of the layer-deposition means (1) towards the lift arrangement (3), feeds the lath down towards the lift arrangement to interaction with the upper surface of a layer of timber (2) that has been laid on the lift arrangement (3) and retains its interaction with the rear end of the lath (5) at the same time as the return motion (6b) of the layer-deposition means (1), such that the layer-deposition means (1) carries out a return motion from the lift arrangement (3) while the lath-deposition means retains its grip on the lath.

2. The method according to claim 1, including a combination of each one of the steps (i) and (ii).

3. The method according to any one of claims 1-2, whereby the lath (5) during its feed down by the deposition means (10) is held freely supporting essentially perpendicular to the feed-down direction of the lift arrangement (3).

4. The method according to any one of claims 1-3 and where a simultaneous transversely directed relative motion is carried out between laths (5) and layers of timber (2), whereby the lath (5) is located during the simultaneous transversely directed relative motion at a position under a layer of timber (2") that has been fed in over the stacker (3).

5. The method according to any one of claims 1-4, whereby the lath-deposition means (10) feeds the lath (5) down from a lath cassette (30) that is located at the side of the lath-deposition means (10).

6. An arrangement that, during the output feed of layers of timber (2), forms stacks of timber by laying laths (5) between different layers in a stack, perpendicular to the longitudinal direction of the layer, and comprising one or several layer-deposition means (1) that support the layers of timber, which means moves forwards towards, over, down and returns away from a lift arrangement (3) on which the layer has been laid, a mobile lath-deposition means (10) for each lath that, gripping the relevant lath by means of a gripper (10a) from a position over the lift arrangement, is arranged to move down towards the lift arrangement in a direction that is parallel to the direction of motion of the lift arrangement, **characterised in that** the gripper (10a) is designed to grip the rear end of a lath (5) and thus the end of the lath that faces away from the direction of motion of the layer-deposition means (1) towards the lift arrangement (3), and that the lath-deposition means (10) is arranged to feed the lath down from the upper position at which the lath has been gripped towards the lift arrangement (3) in a direction that is parallel to the direction of motion (3b) of the lift arrangement (3), whereby the lath is held freely supporting essentially perpendicular to the downwards direction of feed during the motion down towards the lift arrangement (3).

7. The arrangement according to claim 6, whereby the forwards feed motion (6a) of the layer-deposition means (1) is so arranged to the motion of the lath-deposition means (10) down towards the lift arrangement (3) that laths (5) and layers of timber (2), at least during a part of the procedure, carry out transversely directed relative motion at different levels over the lift arrangement (3), without being in contact with each other.

8. The arrangement according to any one of claims 6-7, whereby the lath-deposition means (10) is arranged to bring the lath (5) that has been gripped at its rear end to interaction with the upper surface of a layer of timber (2) that has been laid on the lift arrangement (3), and that the lath-deposition means retains its interaction with the lath at the same time as the layer-deposition means (1) carries out its return motion (6b) from the lift arrangement (3).

9. The arrangement according to any one of claims 6-8 whereby the gripper (10a) of the lath-deposition means (10) is supported on a slide (10b) that can be vertically driven upwards and downwards along rails (1 Of) between an upper, defined collection position (11), in which the gripper can grip a lath fed out from a lath cassette (30), and a lower, defined deposit position (12), in which the lath can be deposited onto a layer of timber (2) that has been laid on the lift arrangement (3).

10. The arrangement according to claim 9, comprising one of a series of lath-handling units that work in pairs and that are separated by a mutual distance, being placed in a row over the lift arrangement (3), perpendicular to the length of the pieces of timber in each layer of timber (2) on the lift arrangement, whereby each such lath-handling unit includes a combination of a lath-deposition means (10) and a lath cassette (30) arranged parallel to this means.

11. The arrangement according to any one of claims 9-10, whereby each lath cassette (30) includes not only a lath magazine (31) in which laths (5) are stored stacked on each other, but also a lath-promotion mechanism (32) for the promotion of an individual lath from a lath-output opening (31 a) on the lower surface of the lath magazine to the upper collection position (11) at the side of the lath cassette, in which collection position the gripper (10a) of the lath-deposition means (10) can grip the lath at its rear end.

12. The arrangement according to any one of claims 6-11, comprising a lath-depression means (50) that is located on the opposing side of the lift arrangement (3) relative to the layer-deposition means (1), and demonstrating a lath-depression finger (53) that is arranged to move by a mechanism in a direction parallel to the direction of motion of the layer-deposition means, along a shallow pathway between a promoted depression position above the lift arrangement (3), in which the lath-depression finger exerts a pre-determined depressing force against the upper surface of a lath (5) that has been placed on a layer of timber (2) that has been placed in the lift arrangement, and a withdrawn rear resting position in which the lath-depression finger (53) is located in a position in which it is withdrawn from the position over the lift arrangement (3).

13. The use of a lath (5) that has been gripped at its rear end as a holder during the stacking of timber to a stack of timber with a stacker by allowing the lath to interact with the upper surface of pieces of timber of a layer of timber that has been placed in the stack of timber while a layer-deposition means (1) that is a component of the stacker is withdrawn, in its return motion, from the said layer of timber.

## Patentansprüche

1. Verfahren während des Ausbringens von Bauholzlagen (2), um Bauholzstapel durch Positionieren von Latten (5) zwischen verschiedene Lagen quer zur Längsrichtung der Lage zu bilden, wobei ein oder mehrere Lagenablagemittel (1), welche die Lagen von Bauholz stützen, sich in Richtung, über, unter und weg von einer Hubvorrichtung (3) bewegen, auf welche die Lagen gelegt werden, dass Latten (5) auf die Oberseite der Bauholzlagen platziert werden, die mit Hilfe eines mobilen Lattenablagemittels (10) für jede Latte auf die Hubvorrichtung gelegt worden sind, wobei das Mittel (10) die Latte von einer Position über der Hubvorrichtung im Wesentlichen parallel zur Bewegungsrichtung der Hubvorrichtung (3) nach unten bewegt, **dadurch gekennzeichnet, dass** es einen der folgenden Schritte umfasst:
(i) dass das Lattenablagemittel (10) während das Fassens des hinteren Endes einer Latte (5) und somit des Endes der Latte, das der Bewegungsrichtung des Lagenablagemittels (1) in Richtung der Hubvorrichtung (3) abgewandt ist, die Latte in Richtung der Hubvorrichtung (3) gleichzeitig mit der Vorschubbewegung (6a) des Lagenablagemittel (1) in Richtung der Hubvorrichtung nach unten bewegt, sodass Latten und Bauholzlagen zumindest während eines Teils des Verfahrens eine quer gerichtete Relativbewegung in verschiedenen Ebenen oberhalb der Hubvorrichtung (3) ausführen, ohne in Kontakt miteinander zu sein:
(ii) dass das Lattenablagemittel (10) während des Fassens des hinteren Endes einer Latte (5) und somit des Endes der Latte, das der Bewegungsrichtung des Lagenablagemittels (1) in Richtung der Hubvorrichtung (3) abgewandt ist, die Latte in Richtung der Hubvorrichtung zur Wechselwirkung mit der Oberseite einer Bauholzlage (2), die auf die Hubvorrichtung (3) gelegt wurde, nach unten bewegt und seine Wechselwirkung mit dem hinteren Ende der Latte (5) gleichzeitig mit der Rücklaufbewegung (6b) des Lagenablagemittels (1) beibehält, sodass das Lagenablagemittel (1) eine Rücklaufbewegung von der Hubvorrichtung (3) ausführt, während das Lattenablagemittel seinen Griff auf die Latte beibehält.

2. Verfahren nach Anspruch 1, einschließlich einer Kombination der beiden Schritte (i) und (ii).

3. Verfahren nach einem der Ansprüche 1 bis 2, wobei die Latte (5) während ihrer durch das Ablagemittel (10) bewirkten Abwärtsbewegung im Wesentlichen quer zur Richtung der Abwärtsbewegung der Hubvorrichtung (3) frei tragend gehalten wird.

4. Verfahren nach einem der Ansprüche 1 bis 3 und wobei eine gleichzeitige, quer gerichtete Relativbewegung zwischen Latten (5) und Bauholzlagen (2) ausgeführt wird , wobei sich die Latte (5) während der gleichzeitigen, quer gerichteten Relativbewegung in einer Position unter einer Bauholzlage (2") befindet, die über die Stapelvorrichtung (3) hineinbewegt wurde.

5. Verfahren nach einem der Ansprüche 1 bis 4, wobei das Lattenablagemittel (10) die Latte (5) aus einer Lattenkassette (30), die sich seitlich neben dem Lattenablagemittel (10) befindet, abwärts herausbewegt.

6. Vorrichtung, die während der Ausgabe von Bauholzlagen (2) durch das Legen von Latten (5) zwischen verschiedene Lagen in einem Stapel quer zur Längsrichtung der Lage Bauholzstapel bilden und ein oder mehrere Lagenablagemittel (1) umfassen, welche die Bauholzlagen stützen, wobei sich das Mittel in Richtung, über, unter und weg von einer Hubvorrichtung (3) bewegt, auf die die Lage platziert wurde, ein mobiles Lattenablagemittel (10) für jede Latte, das durch Greifen der entsprechenden Latte mit Hilfe einer Greifvorrichtung (10a) aus einer Position über der Hubvorrichtung so angeordnet ist, dass es hinunter zur Hubvorrichtung bewegt wird, in einer Richtung parallel zur Richtung der Bewegung der Hubvorrichtung, **dadurch gekennzeichnet, dass** die Greifvorrichtung (10a) zum Fassen des hinteren Endes einer Latte (5) ausgelegt ist und somit des Endes der Latte, das der Bewegungsrichtung des Lagenablagemittels (1) in Richtung der Hubvorrichtung (3) abgewandt ist, und dass das Lattenablagemittel (10) so angeordnet ist, dass es die Latte von der oberen Position, von welcher die Latte zur Hubvorrichtung (3) hin ergriffen wurde, in eine Richtung parallel zur Bewegungsrichtung (3b) der Hubvorrichtung (3) nach unten bewegt, wobei die Latte während der Abwärtsbewegung zur Hubvorrichtung (3) hin im Wesentlichen quer zur Abwärtsrichtung des Vorschubs frei tragend gehalten wird.

7. Vorrichtung nach Anspruch 6, wobei die Vorschubbewegung (6a) des Lagenablagemittels (1) so in Bezug auf die Bewegung des Lattenablagemittels (10) nach unten in Richtung der Hubvorrichtung (3) angeordnet ist, sodass Latten (5) and Bauholzlagen (2) zumindest während eines Teils des Verfahrens eine quer gerichtete Relativbewegung in verschiedenen Ebenen oberhalb der Hubvorrichtung (3) ausführen, ohne in Kontakt miteinander zu sein.

8. Vorrichtung nach einem der Ansprüche 6-7, wobei das Lattenablagemittel (10) so angeordnet ist, dass es die Latte (5), die zur Wechselwirkung mit der Oberseite einer Bauholzlage (2), die auf die Hubvorrichtung (3) gelegt wurde, an ihrem hinteren Ende ergriffen wurde und dass das Lattenablagemittel seine Wechselwirkung mit der Latte beibehält, während das Lagenablagemittel (1) gleichzeitig seine Rücklaufbewegung (6b) von der Hubvorrichtung (3) ausführt.

9. Vorrichtung nach einem der Ansprüche 6-8, wobei die Greifvorrichtung (10a) des Lattenablagemittels (10) auf einer Gleitschiene (10b) gehalten wird, die entlang Schienen (10f) vertikal nach oben und nach unten gefahren werden kann, zwischen einer oberen, definierten Sammelposition (11), in welcher die Greifvorrichtung ein aus einer Lattenkassette (30) ausgegebene Latte fassen kann, und einer unteren, definierten Ablageposition (12), in welcher die Latte auf eine Bauholzlage (2), die auf die Hubvorrichtung (3) gelegt wurde, aufgebracht werden kann.

10. Vorrichtung nach Anspruch 9, umfassend eine aus einer Reihe von Lattenbehandlungseinheiten, die in Paaren arbeiten und durch einen gegenseitigen Abstand voneinander getrennt sind, wobei sie in einer Reihe über der Hubvorrichtung (3), senkrecht zu den Bauholzstücken in jeder Bauholzlage (2) auf der Hubvorrichtung angeordnet sind, wobei jede dieser Lattenbehandlungseinheiten eine Kombination aus einem Lattenablagemittel (10) und einer parallel zu diesem Mittel angeordneten Lattenkassette (30) umfasst.

11. Vorrichtung nach einem der Ansprüche 9-10, wobei jede Lattenkassette (30) nicht nur ein Lattenmagazin (31) umfasst, in dem Latten (5) aufeinander gestapelt gelagert werden, sondern auch einen Lattenfördermechanismus (32) für das Befördern einer einzelnen Latte aus einer Lattenaustrittsöffnung (31 a) auf der unteren Fläche des Lattenmagazins zur oberen Sammelposition (11) an der Seite der Lattenkassette, wobei die Greifvorrichtung (10a) des Lattenablagemittels (10) die Latte in dieser Sammelposition an ihrem hinteren Ende fassen kann.

12. Vorrichtung nach einem der Ansprüche 6 bis 11, ein Mittel (50) zum Niederdrücken von Latten umfassend, das sich auf der gegenüberliegenden Seite der Hubvorrichtung (3) relativ zum Lagenablagemittel (1) befindet, und einen Finger (53) zum Niederdrücken von Latten aufweisend, der angeordnet ist, um durch einen Mechanismus in einer Richtung parallel zur Bewegungsrichtung des Lagenablagemittels bewegt zu werden, entlang einer flachen Bahn zwischen einer geförderten Absenkposition oberhalb der Hubvorrichtung (3), in welcher der Finger zum Niederdrücken von Latten eine vorbestimmte Niederdrückkraft gegen die obere Fläche der Latte (5) ausführt, die auf eine Bauholzlage (2) platziert wurde, die in die Hubvorrichtung platziert wurde, und eine zurückgezogene hintere Ruheposition, in welcher der Finger (53) zum Niederdrücken von Latten sich in einer Position befindet, in welcher er aus der Position über der Hubvorrichtung (3) zurückgezogen wird.

13. Verwendung einer Latte (5), die an ihrem hinteren Ende gefasst wird, als eine Haltevorrichtung während des Stapelns von Bauholz zu einem Bauholzstapel mittels einer Stapelvorrichtung, indem die Latte mit der oberen Fläche von Bauholzstücken einer Bauholzlage zusammenwirken kann, welche in den Bauholzstapel platziert wurde, während ein Lagenablagemittel (1), das eine Komponente der Stapelvorrichtung ist, bei seiner Rücklaufbewegung aus dieser Bauholzlage zurückgezogen wird.

## Revendications

1. Procédé pendant l'alimentation de sortie de couches de bois d'oeuvre (2), pour former des piles de bois d'oeuvre en positionnant des lattes (5) entre différentes couches perpendiculairement à la direction longitudinale de la couche, selon lequel un ou plusieurs moyens de dépôt de couche (1) qui soutiennent les couches de bois d'oeuvre avancent vers, au-dessus, en dessous et s'éloignent d'un dispositif de levage (3) sur lequel les couches sont posées, **caractérisé en ce que** les lattes (5) sont placées sur la surface supérieure de couches de bois d'oeuvre qui ont été posées sur le dispositif de levage au moyen d'un moyen mobile de dépôt de latte (10) pour chaque latte, lequel moyen (10) alimente vers le bas la latte depuis une position au-dessus du dispositif de levage essentiellement parallèle à la direction de mouvement du dispositif de levage (3), **caractérisé en ce qu'**il comprend l'une quelconque des étapes suivantes :
(i) une étape selon laquelle le moyen de dépôt de latte (10), pendant la préhension de l'extrémité arrière d'une latte (5) et, donc, cette extrémité de la latte qui est tournée à l'écart de la direction de mouvement du moyen de dépôt de couche (1) vers le dispositif de levage (3), alimente la latte vers le bas en direction du dispositif de levage (3) en même temps que le mouvement d'alimentation (6a) du moyen de dépôt de couche (1) en direction du dispositif de levage de telle sorte que les lattes et couches de bois d'oeuvre, au moins pendant une partie de la procédure, effectuent un mouvement relatif dirigé transversalement à différents niveaux au-dessus du dispositif de levage (3), sans contact entre elles :
(ii) une étape selon laquelle le moyen de dépôt de latte (10) pendant la préhension de l'extrémité arrière d'une latte (5) et, donc, cette extrémité de la latte qui est tournée à l'écart de la direction de mouvement du moyen de dépôt de couche (1) vers le dispositif de levage (3), alimente la latte vers le bas en direction du dispositif de levage pour interagir avec la surface supérieure d'une couche de bois d'oeuvre (2) qui a été posée sur le dispositif de levage (3) et conserve son interaction avec l'extrémité arrière de la latte (5) en même temps que le mouvement de retour (6b) du moyen de dépôt de couche (1), de telle sorte que le moyen de dépôt de couche (1) effectue un mouvement de retour depuis le dispositif de levage (3) alors que le moyen de dépôt de latte conserve sa préhension sur la latte.

2. Procédé selon la revendication 1, comprenant une combinaison de chacune des étapes (i) et (ii).

3. Procédé selon l'une quelconque des revendications 1 à 2, selon lequel la latte (5) pendant son alimentation vers le bas par le moyen de dépôt (10) est maintenue en soutien libre essentiellement perpendiculaire à la direction d'alimentation vers le bas du dispositif de levage (3).

4. Procédé selon l'une quelconque des revendications 1 à 3, et où un mouvement relatif simultané dirigé transversalement est effectué entre les lattes (5) et les couches de bois d'oeuvre (2), selon lequel la latte (5) est située pendant le mouvement relatif simultané dirigé transversalement à une position sous une couche de bois d'oeuvre (2") qui a été alimentée au-dessus de l'empileuse (3).

5. Procédé selon l'une quelconque des revendications 1 à 4, selon lequel le moyen de dépôt de latte (10) alimente la latte (5) vers le bas depuis une cartouche de lattes (30) qui est située sur le côté du moyen de dépôt de latte (10).

6. Dispositif qui, pendant l'alimentation de sortie de couches de bois d'oeuvre (2), forme des piles de bois d'oeuvre en posant des lattes (5) entre différentes couches dans une pile, perpendiculaires à la direction longitudinale de la couche, et comprenant un ou plusieurs moyens de dépôt de couche (1) qui soutiennent les couches de bois d'oeuvre, lesquels moyens avancent vers, au-dessus, en dessous et s'éloignent d'un dispositif de levage (3) sur lequel la couche a été posée, un moyen mobile de dépôt de latte (10) pour chaque latte qui, en saisissant la latte appropriée au moyen d'un organe de préhension (10a) depuis une position au-dessus du dispositif de levage, est disposé pour se déplacer vers le bas en direction du dispositif de levage dans une direction qui est parallèle à la direction de mouvement du dispositif de levage, **caractérisé en ce que** l'organe de préhension (10a) est conçu pour saisir l'extrémité arrière d'une latte (5) et, donc, l'extrémité de la latte qui est tournée à l'écart de la direction de mouvement du moyen de dépôt de couche (1) en direction du dispositif de levage (3), et **en ce que** le moyen de dépôt de latte (10) est disposé pour alimenter la latte vers le bas depuis la position supérieure à laquelle la latte a été saisie en direction du dispositif de levage (3) dans une direction qui est parallèle à la direction de mouvement (3b) du dispositif de levage (3), selon lequel la latte est maintenue en soutien libre essentiellement perpendiculaire à la direction d'alimentation vers le bas pendant le mouvement vers le bas en direction du dispositif de levage (3).

7. Dispositif selon la revendication 6, selon lequel le mouvement d'alimentation vers l'avant (6a) du moyen de dépôt de couche (1) est disposé par rapport au mouvement du moyen de dépôt de latte (10) vers le bas en direction du dispositif de levage (3) de telle façon que les lattes (5) et couches de bois d'oeuvre (2), au moins pendant une partie de la procédure, effectuent un mouvement relatif dirigé transversalement à différents niveaux au-dessus du dispositif de levage (3), sans être en contact entre elles.

8. Dispositif selon l'une quelconque des revendications 6 à 7, selon lequel le moyen de dépôt de latte (10) est disposé pour amener la latte (5) qui a été saisie au niveau de son extrémité arrière en interaction avec la surface supérieure d'une couche de bois d'oeuvre (2) qui a été posée sur le dispositif de levage (3), et que le moyen de dépôt de latte conserve son interaction avec la latte en même temps que le moyen de dépôt de couche (1) effectue son mouvement de retour (6b) depuis le dispositif de levage (3).

9. Dispositif selon l'une quelconque des revendications 6 à 8, selon lequel l'organe de préhension (10a) du moyen de dépôt de latte (10) est soutenu sur une glissière (10b) qui peut être entraînée verticalement vers le haut et vers le bas le long de rails (10f) entre une position supérieure définie de collecte (11), dans laquelle l'organe de préhension peut saisir une latte alimentée en sortie par une cartouche de lattes (30), et une position inférieure définie de dépôt (12), dans laquelle la latte peut être déposée sur une couche de bois d'oeuvre (2) qui a été posée sur le dispositif de levage (3).

10. Dispositif selon la revendication 9, comprenant une parmi une série d'unités de manipulation de lattes qui travaillent par paires et qui sont séparées d'une distance réciproque, étant placées dans une rangée au-dessus du dispositif de levage (3), perpendiculaires à la longueur des pièces de bois d'oeuvre dans chaque couche de bois d'oeuvre (2) sur le dispositif de levage, selon lequel chaque unité de manipulation de latte de ce type comprend une combinaison d'un moyen de dépôt de latte (10) et d'une cartouche de lattes (30) disposés parallèles à ce moyen.

11. Dispositif selon l'une quelconque des revendications 9 à 10, selon lequel chaque cartouche de lattes (30) comprend non seulement un chargeur de lattes (31) dans lequel des lattes (5) sont stockées en empilement les unes sur les autres, mais également un mécanisme de promotion de latte (32) pour la promotion d'une latte individuelle à partir d'une ouverture de sortie de latte (31 a) sur la surface inférieure du chargeur de lattes vers la position supérieure de collecte (11) sur le côté de la cartouche de lattes, position de collecte dans laquelle l'organe de préhension (10a) du moyen de dépôt de latte (10) peut saisir la latte au niveau de son extrémité arrière.

12. Dispositif selon l'une quelconque des revendications 6 à 11, comprenant un moyen d'enfoncement de latte (50) qui est situé sur le côté opposé du dispositif de levage (3) par rapport au moyen de dépôt de couche (1), et présentant un doigt d'enfoncement de latte (53) qui est disposé pour se déplacer grâce à un mécanisme dans une direction parallèle à la direction de mouvement du moyen de dépôt de couche, le long d'une voie superficielle entre une position d'enfoncement favorisée au-dessus du dispositif de levage (3), dans laquelle le doigt d'enfoncement de latte exerce une force d'enfoncement prédéterminée contre la surface supérieure d'une latte (5) qui a été placée sur une couche de bois d'oeuvre (2) qui a été placée dans le dispositif de levage, et une position de repos arrière retirée dans laquelle le doigt d'enfoncement de latte (53) est situé dans une position dans laquelle il est retiré de la position au-dessus du dispositif de levage (3).

13. Utilisation d'une latte (5) qui a été saisie au niveau de son extrémité arrière, en tant que support pendant l'empilement de bois d'oeuvre sur une pile de bois d'oeuvre avec une empileuse en permettant à la latte d'interagir avec la surface supérieure de pièces de bois d'oeuvre d'une couche de bois d'oeuvre qui a été placée dans la pile de bois alors qu'un moyen de dépôt de couche (1) qui est un composant de l'empileuse est retiré, dans son mouvement de retour, de ladite couche de bois d'oeuvre.
